# EUROPEAN PATENT APPLICATION

(11) **EP 4 549 696 A1**
(43) Date of publication of application: **07.05.2025**
(21) Application number: 23306907.9
(22) Date of filing: 03.11.2023
(51) Int. Cl.: E21B 33/035, E21B 43/01, F03D 80/00, H02J 3/00

(54) **OFFSHORE HYDROCARBON PRODUCTION SYSTEM**

(71) Applicant: Saipem S.p.A., 20138 Milano (IT)
(72) Inventor: ARCANGELETTI, Giorgio, 20138 MILANO (IT); DELAPLACE, Thomas, 20138 MILANO (IT); MAURIES, Benjamin, 20138 MILANO (IT)
(74) Representative: Studio Torta S.p.A.

(57) **Abstract**

An offshore hydrocarbon production system is provided with:
- an offshore floating assembly (6) having a floating unit (12) provided with a renewable power source (13) to generate electric power and a back-up power source (15);
- an underwater hydrocarbon production facility (4), which is located on the bed (2) of a body of water (3) and is electrically powered by the renewable power source (13) and/or the back-up power source (15);
- a power circuit having a power management device (16) connected to the renewable power source (13), the back-up power source (15) and the underwater hydrocarbon production facility (4); and
- a control circuit having a master control unit (21) connected to the power management device (16) and the underwater hydrocarbon production facility (4) for balancing the production of electric power and the demand of electric power.

## Description

### TECHNICAL FIELD

This invention relates to an offshore hydrocarbon production system comprising an underwater hydrocarbon production facility and an offshore floating assembly to provide the energy for the functioning of the underwater production facility. In this description, the term "production" refers to the extraction and/or other operations performed to allow required hydrocarbon exploitation comprising separation, pumping, injecting water into the reservoir, etc.

The extraction of hydrocarbon from underwater wells has significantly developed in the last few decades and the technology for optimising the management and the costs of extracting hydrocarbon coming from underwater wells are rapidly evolving.

### STATE OF THE ART

The current trend is to confine as many operations as possible to a bed of a body of water in the vicinity of wells as illustrated in patent applications WO 2016/125,114 and WO 2017/122,172 belonging to the applicant. These documents show underwater hydrocarbon production facilities in which several devices are described that use pumps and compressors, which are electrically powered and are selectively interconnected by means of ducts controlled by valves. The facilities described in the above-mentioned documents also perform the function of injecting chemicals into the wells or directly into the hydrocarbon to vary parameters features of the hydrocarbon and facilitate the transport or extraction thereof.

In the light of the above, the offshore hydrocarbon production system must be powered with electricity and supplied with the chemicals necessary to operate the underwater facilities themselves.

The further away the underwater hydrocarbon production facility is from the power source and chemicals storage place, the more complex and onerous are the supply of power and of chemicals to the underwater hydrocarbon production facilities.

Many documents, including WO 2019/106,283, GB 2,546,251, GB 2,383,978, and WO 2009/068,712 suggest producing electricity by means of an offshore floating assembly comprising a semi-submersible support structure and at least one electric generator mounted on the semi-submersible support structure. An offshore floating assembly of the type described above may be arranged near the underwater hydrocarbon production facility and, thus, avoid complexity in distributing power from remote sites and for long distances.

WO 2022/003621 of the current applicant discloses a floating offshore floating assembly configured to provide electric power from at least two different power sources to an underwater hydrocarbon production facility.

However, the management of electric power generation and distribution of the entire system is currently not completely satisfactory.

### SUBJECT OF THE PATENT

The purpose of this invention is to realize an offshore hydrocarbon production system that can mitigate the drawbacks of the prior art.

According to this invention there is realized an offshore hydrocarbon production system, the system comprising:
- an offshore floating assembly floating in a body of water comprising at least one renewable power source to generate electric power and at least one back-up power source;
- an underwater hydrocarbon production facility, which is located on the bed of the body of water and is electrically powered by the renewable power source and /or the aback-up power source;
- a power circuit comprising a power management device connected to the renewable power source, the back-up power source, and the underwater hydrocarbon production facility; and
- a control circuit comprising a master control unit connected to the power management device and the underwater hydrocarbon production facility for balancing the production of electric power and the demand of electric power.

This configuration allows closely controlling the power demands and the power outputs of the different power sources and optimizing the power production as a function of the necessity and the weather conditions.

In a preferred embodiment of the present invention the control circuit comprises an underwater control unit, which is configured to control the operations of the underwater hydrocarbon production facilities and acquire signals correlated to the demand of electric power from the underwater hydrocarbon production facility and is connected to the master control unit, which is configured to provide signals for controlling the underwater control unit.

In this way, it is possible thoroughly controlling the underwater hydrocarbon processing facility that has a rather complex structure and exchanging information with the master control unit.

In particular, the master control unit is configured to provide signals for controlling the renewable power source and the back-up power source on the basis of the energy demand of underwater hydrocarbon processing facility.

In particular, the control circuit comprises telecommunication infrastructure for connecting the master control unit and an operator control room remote from the offshore floating assembly.

In this way the offshore floating assembly can be unmanned, and the entire offshore hydrocarbon production system can be monitored and controlled from remote.

In particular, the control circuit is connected to the renewable power source and to the back-up power source for controlling the overall power production as a function of the power demand.

In this way, it is possible to select the power outputs of the power sources.

The power circuit comprises a power conversion unit between the renewable power source and the power management device; the control circuit being connected to the power conversion unit.

The power conversion unit allows obtaining power outputs with the required features in terms of voltage and frequency.

The underwater hydrocarbon production facility comprises a pumping assembly; the control circuit comprising a first power line for connecting the power management device to the pumping assembly and an inverter along said first power line for boosting the pumping assembly in a start-up transitional phase.

In such case, the boosting the consists in a transitional change of frequency.

The underwater hydrocarbon production facility comprises an underwater equipment, the power circuit comprises a second power line for connecting the power management device to the underwater equipment.

In other words, the power circuit has a dedicated power line for the electrical equipment that do not require a boost.

The control circuit comprises a third power line for connecting the renewable power source to the power management device for supplying power from the renewable power source to the power management device and a fourth power line for connecting the back-up power source to the power management device for supplying power from the back-up power source to the power management device.

In this way, the power management device has the functions of a power collector and switch controlled by the master control unit.

In particular, the power circuit comprises a fifth power line for connecting the renewable power source to the power management device for supplying power from the power management device to the renewable power source for the self-power consumption.

This is necessary to supply the servo mechanisms of the renewable power source.

In accordance with an embodiment of the present invention, the power circuit comprises a power storage, the power management device being configured for supplying into the power storage power in excess and retrieving power form the power storage.

This configuration allows managing quick variation of power demand and power output.

According to an embodiment of the present invention, the offshore floating assembly comprises at least one additional floating unit comprising at least one power source; and a slave control unit.

In this way, is possible to make modular offshore floating assembly with the possibility of sizing the output of the offshore floating assembly by combining several additional floating units, and servicing those that need maintenance without interruption of the power supply to the underwater hydrocarbon production facility.

In this case, the offshore floating assembly comprises an umbilical for transferring power from the additional floating unit to the power management system and exchanging signals between the master control unit and a slave control unit.

### BRIEF DESCRIPTION OF THE FIGURES

Additional features and advantages of this invention will be apparent from the following description of a nonlimiting embodiment thereof, with reference to the accompanying figures, wherein:
- Figure 1 is a schematic view, with parts removed for clarity, of an offshore hydrocarbon production system made in accordance with the present invention; and
- Figure 2 is a schematic view, with parts removed for clarity, of a variation of the system in Figure 1.

### PREFERRED EMBODIMENT OF THE INVENTION

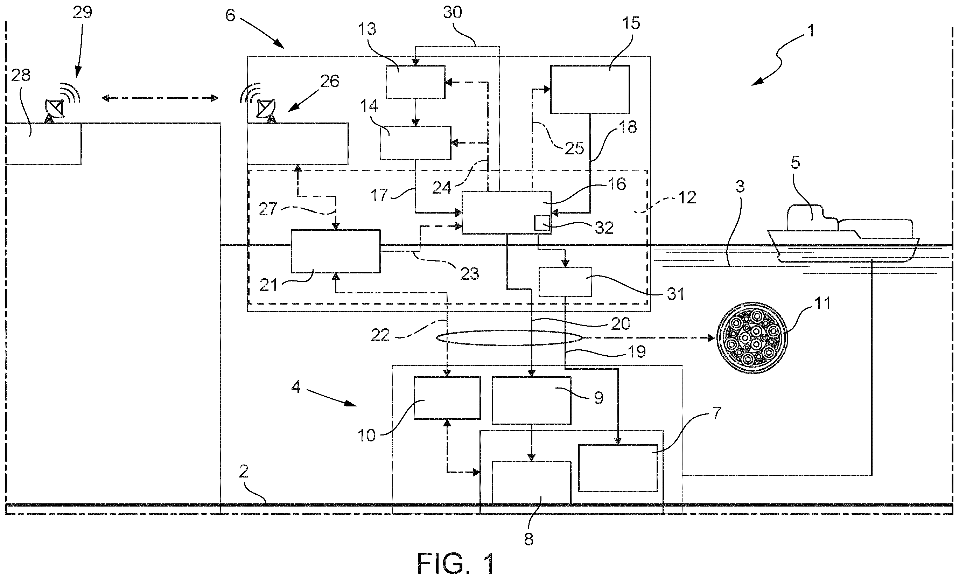

With reference to Figure 1, the reference number 1 indicates, as a whole, an offshore hydrocarbon production system arranged, in part, on the bed 2 of a body of water 3 and, in part, floating in the body of water 3 and, in part, in a remote location, in particular onshore.

The system 1 comprises an underwater hydrocarbon production facility 4 arranged on the bed 2 of the body of water 3; a vessel 5 connected to the underwater hydrocarbon production facility 4; and an offshore floating assembly 6 to supply electricity and chemicals to the underwater hydrocarbon production facility 4.

In the illustrated example, the underwater hydrocarbon production facility 4 operates on the underwater wells, not shown in the Figures, and comprises a pump assembly 7 including production and injection pumps; an underwater equipment 8 including separators, compressors, electrically controlled valves; a power distribution unit 9; and an underwater control system 10.

The underwater hydrocarbon production facility 4 is connected to the vessel 5 for transferring the processed hydrocarbon to the vessel 5. The vessel 5 may be connected to underwater hydrocarbon production facility to feed water to be injected into the injection wells to stimulate the recovery of hydrocarbon from the reservoir with secondary and tertiary recovery methods. In particular, the vessel 5 is an FPSO (Floating Production Storage and Offloading) unit generally used in the exploitation of underwater hydrocarbon reservoirs.

The offshore floating assembly 6 has the function of generating power and supplying power and chemicals to the underwater hydrocarbon production facility 4. In Figure 1, power and chemicals are supplied by means of an umbilical 11. In addition, the umbilical 11 has the function of exchanging control signals, and any hydraulic fluids between the offshore floating assembly 6 and the underwater hydrocarbon production facility 4.

The offshore floating assembly 6 comprises a floating unit 12, for example a semi-submersible support structure, which is of the type disclosed in the patent application WO 2022/003621; a renewable power source 13 comprising a wind turbine and the relative generator; a power conversion unit 14 for converting the power produced by the renewable power source 13; a back-up source 15 for producing electric power by means of a generator actuated by a combustion engine, in particular a diesel engine.

According to a variation, the back-up power source might be a solar cells-based source combined with energy storage.

The offshore floating assembly 6 comprises power circuit including the power conversion unit and a power management device 16 for managing the power generated by the renewable power source 13, the power generated by the back-up power source, and the power demand of the offshore hydrocarbon production system 1. The power management device 16 is connected to the renewable power source 13, the power conversion unit 14, the back-up power source 15, the pump assembly 7, and the underwater distribution unit 9 through respective power lines 17, 18, 19 and 20 of the power circuit.

The offshore floating assembly 6 comprises a master control unit 21, which is connected to the underwater control unit 10, the power management device 16; the renewable power source 13 and the power conversion unit 14; and the back-up power source 15 though respective control lines 22, 23, 24 and 25 defining a control circuit.

The control circuit comprises a telecommunication infrastructure including a telecommunication sender and receiver 26 connected to the master control unit 21 through a dedicated control line 27 and a telecommunication sender and receiver 29 connected to a control room 28 which is located remotely from the offshore floating assembly 6, for example onshore for exchanging information between the master control unit 21 and the control room 28.

The control room 28 is provided with control devices controlled by humans whereas the offshore floating assembly 6 is configured to be automatically operated and monitored and controlled from remote and allows access on board to humans for maintenance and inspection services.

The offshore floating assembly 6 comprises a further power line 30 extending from the power managing device 16 to the renewable power source 13 to supply electric power for the self-power consumption of the renewable power source 13.

The offshore floating assembly 6 comprises an inverter 31, for example a variable speed drive VSD inverter, arranged along power line 19 in order to boost power to the pump assembly 7 in the start-up transitional phase.

Power lines 19 and 20 and control line 22 extend from the offshore floating assembly 6 to the underwater hydrocarbon production facility 4 thought the umbilical 11.

The power circuit comprises power storage device 32 to store and release electric power on demand and the power management device 16 in configured to store and retrieve power when needed.

In use, the renewable power source 13 generates electrical power at a medium high voltage, typically 33 kV, whereas the back-up power source 15 generates electrical power at a medium voltage, typically 6,6kV.

The power conversion unit 14 converts electrical power at a medium high voltage into medium voltage in order to supply the power management device 16 with electrical power with the required features, in terms of voltage and frequency, and the power provided by the back-up power source 15.

The power management device 16 is supplied with electricity from the renewable power source 13 and possibly the back-up power source 15, receives a power demand from the subsea hydrocarbon production facility 4, distributes the power, possibly stores the excess power produced by the renewable power source 13, and possibly requires back-up power when the renewable power source 13 is unable to meet the power demand.

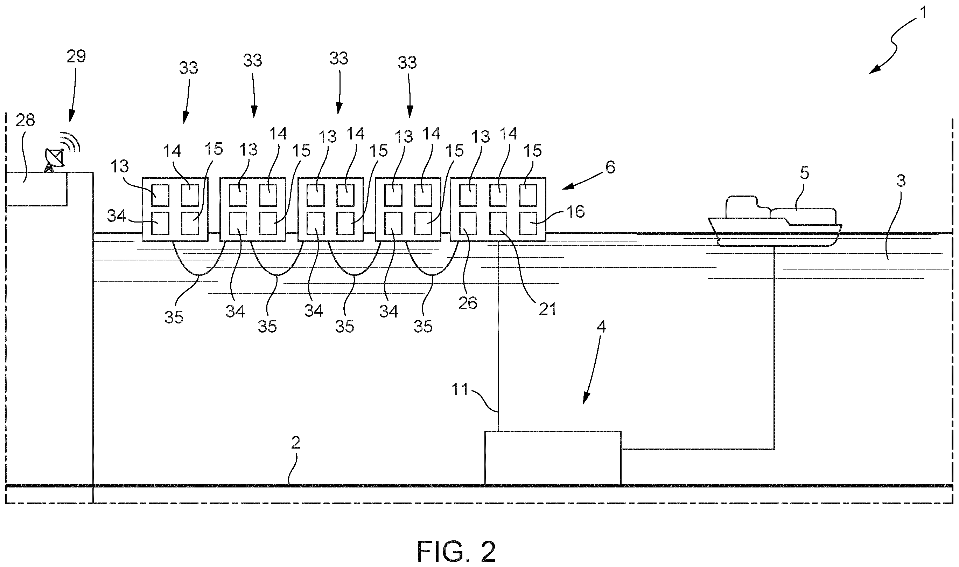

With reference to Figure 2, system 1, in addition to the subsea hydrocarbon production facility 4, the vessel 5, the offshore floating assembly 6 and the control room 28, comprises a plurality of additional floating units 33, each of which comprises a renewable power source generator 15, a power conversion unit 14, a back-up power source 15 and a slave control unit 34.

Each additional floating units 33 is connected to the floating unit 12 by means of umbilical 35 in order to transfer the electrical power generated by the renewable power source 13 and eventually by the back-up power source 15 to the power management device 16, which is called to control the power output of the offshore floating assembly 6, and the power output of each floating unit 33. The control units 34 of the respective additional floating units 33 are connected to the master control unit 21 via the umbilical 35 (Figure 1). The connection of umbilical 35 from one floating unit 33 to floating unit 12 could have a typical electrical connection, star or triangle.

It is apparent, finally, that variations with respect to the embodiments described can be made to this invention without departing from the scope of protection of the appended claims.

## Claims

1. An offshore hydrocarbon production system, the system comprising:
- an offshore floating assembly (6) floating in a body of water (3) comprising at least one renewable power source (13) to generate electric power and at least one back-up power source (15);
- an underwater hydrocarbon production facility (4), which is located on the bed (2) of the body of water (3) and is electrically powered by the renewable power source (13) and /or the back-up power source (15); and
- a power circuit comprising a power management device (16) connected to the renewable power source (13), the back-up power source (15), and the underwater hydrocarbon production facility (4); and
- a control circuit comprising a master control unit (21) connected to the power management device (16) and the underwater hydrocarbon production facility (4) for balancing the production of electric power and the demand of electric power.

2. The system as claimed in Claim 1, wherein the control circuit comprises an underwater control unit (10), which is configured to control the operations of the underwater hydrocarbon production facilities (4) and acquire signals correlated to the demand of electric power from the underwater hydrocarbon production facility (4) and is connected to the master control unit (21), which is configured to provide signals for controlling the underwater control unit (10).

3. The system as claimed in Claim 2, the master control unit (21), which is configured to provide signals for controlling the renewable power source (13) and the back-up power source (15) on the basis of the energy demand of underwater hydrocarbon processing facility (4).

4. The system as claimed in any one of the foregoing Claims, wherein the control circuit comprises telecommunication infrastructure (26, 29) for connecting the master control unit (21) and an operator control room (28) remote from the offshore floating assembly (6).

5. The system as claimed in any one of the foregoing Claims, wherein the control circuit is connected to the renewable power source (17) and to the back-up power source (15) for controlling the overall power production as a function of the power demand.

6. The system as claimed in any one of the foregoing Claims, wherein the power circuit comprises a power conversion unit (14) between the renewable power source (13) and the power management device (16); the control circuit being connected to the power conversion unit (13).

7. The system as claimed in any one of the foregoing Claims, wherein the underwater hydrocarbon production facility (4) comprises a pumping assembly (7); the control circuit comprising a first power line (19) for connecting the power management device (16) to the pumping assembly (7) and an inverter (31) along said first power line (19) for boosting the pumping assembly (7) in a start-up transitional phase.

8. The system as claimed in any one of the foregoing Claims, wherein the underwater hydrocarbon production facility (4) comprises an underwater equipment (8), the power circuit comprises a second power line (20) for connecting the power management device (16) to the underwater equipment (8) .

9. The system as claimed in any one of the foregoing Claims, wherein the power circuit comprises a third power line (17) for connecting the renewable power source (13) to the power management device (16) for supplying power from the renewable power source (13) to the power management device (16).

10. The system as claimed in any one of the foregoing Claims, wherein the power circuit comprises a fourth power line (18) for connecting the powered back-up power source (13) to the power management device (16) for supplying power from the back-up power source (13) to the power management device (16).

11. The system as claimed in any one of the foregoing Claims, wherein the power circuit comprises a fifth power line (30) for connecting the renewable power source (13) to the power management device (16) for supplying power from the power management device (16) to the renewable power source (13) for the self-power consumption.

12. The system as claimed in any one of the foregoing Claims, wherein the power circuit comprises a power storage (32), the power management device (16) being configured for supplying into the power storage (32) power in excess and retrieving power form the power storage (32).

13. The system as claimed in any one of the foregoing Claims, wherein the offshore floating assembly (6) comprises at least one additional floating unit (33) comprising at least one power source (13; 15); and a slave control unit (34) .

14. The system as claimed in claim 13, wherein the offshore floating assembly (6) comprises an umbilical (35) for transferring power from the additional floating unit (33) to the power management system (16) and exchanging signals between the master control unit (21) and a slave control unit (33).

15. The system as claimed in any one of the foregoing Claims, wherein the renewable power source (13) comprises a wind turbine.

16. The system as claimed in any one of the foregoing Claims, wherein the back-up power source (15) comprises a combustion engine and or a solar power source.
